# EUROPEAN PATENT APPLICATION

(11) **EP 1 657 854 A1**
(43) Date of publication of application: **17.05.2006**
(21) Application number: 04735812.2
(22) Date of filing: 02.06.2004
(51) Int. Cl.: H04L 12/28

(54) **RADIO COMMUNICATION DEVICE, AD HOC SYSTEM, AND COMMUNICATION SYSTEM**

(30) Priority: 19.08.2003 JP 2003295312; 27.05.2004 JP 2004157997
(71) Applicant: Keio University, Tokyo 108-8345 (JP); Multimedia Research Institute Corp.,, Tokyo 102-0093 (JP)
(72) Inventor: NAKAGAWA, Masao, Keio University Faculty of S & T, Yokohama-shi, Kanagawa 2238522 (JP); ESMAILZADEH, Riaz, Keio University Faculty of S&T, Yokohama-shi, Kanagawa 223852 (JP); LI, Rongqing, Keio University Faculty of S & T, Yokohama-shi, Kanagawa 2238522 (JP)
(74) Representative: Klingseisen, Franz
(86) International application number: PCT/JP2004/008002
(87) International publication number: WO 2005/018161

(57) **Abstract**

An object of the present invention is to improve the network usage efficiency and economy. There is provided a radio communication apparatus (10) having ad-hoc communication means for building an ad-hoc network with other nearby radio communication apparatus and performing communication with the other radio communication apparatus by radio. The ad-hoc communication means comprises: node type setting means for searching the ad-hoc network for the master and setting the node type of the radio communication apparatus (10) to any of the master and slave on the basis of the search result; set-up information acquisition means for, when the node type of the radio communication apparatus (10) is set to the slave, transmitting and receiving control signals to and from the master to acquire set-up information required for communication with any of the master and slave in the ad-hoc network and storing the set-up information in storage means; and data signal transmission means for directly transmitting and receiving data signals to and from any of the master and slave in the ad-hoc network in accordance with the set-up information acquired from the master.

## Description

### Technical Field

The present invention relates to a radio communication apparatus having ad-hoc communication means for building an ad-hoc network with other nearby radio communication apparatus and performing communication with the other radio communication apparatus by radio, and an ad-hoc system and a communication system using the radio communication apparatus.

### Background Art

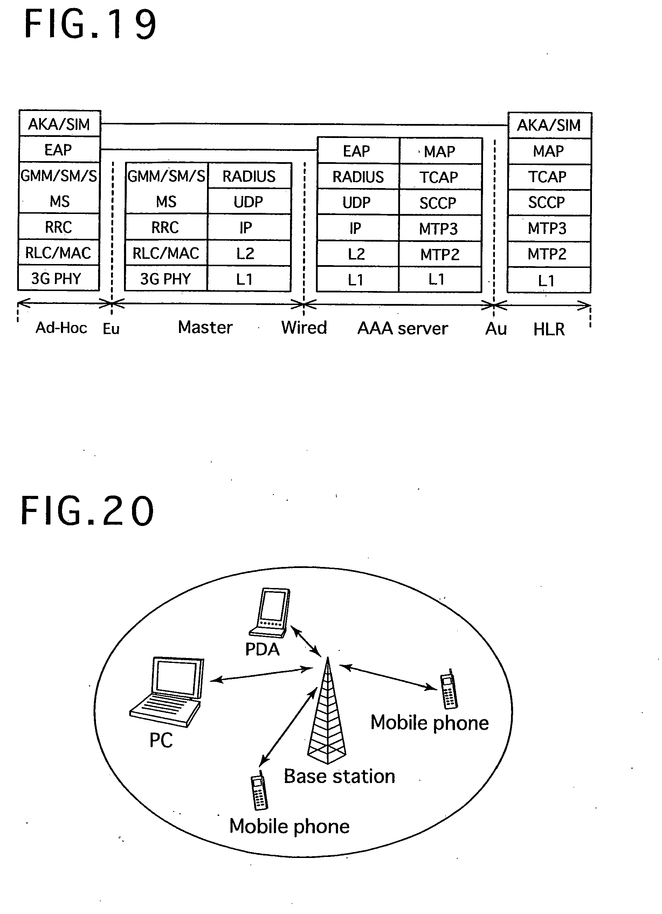

As well known, in a mobile communications network, a mobile station is configured by a radio communication apparatus such as a mobile phone, a personal computer and a PDA, and data transmission between such a mobile station and a base station is wirelessly performed. When a voice call is made or data communication is performed between mobile stations, data is exchanged between the mobile stations via the base station as shown in FIG.20. As telecommunication system to be used for such mobile communication, for example, GSM (Global System for Mobile Communications), WCDMA (Wideband Code Division Multiple Access) and the like are known.

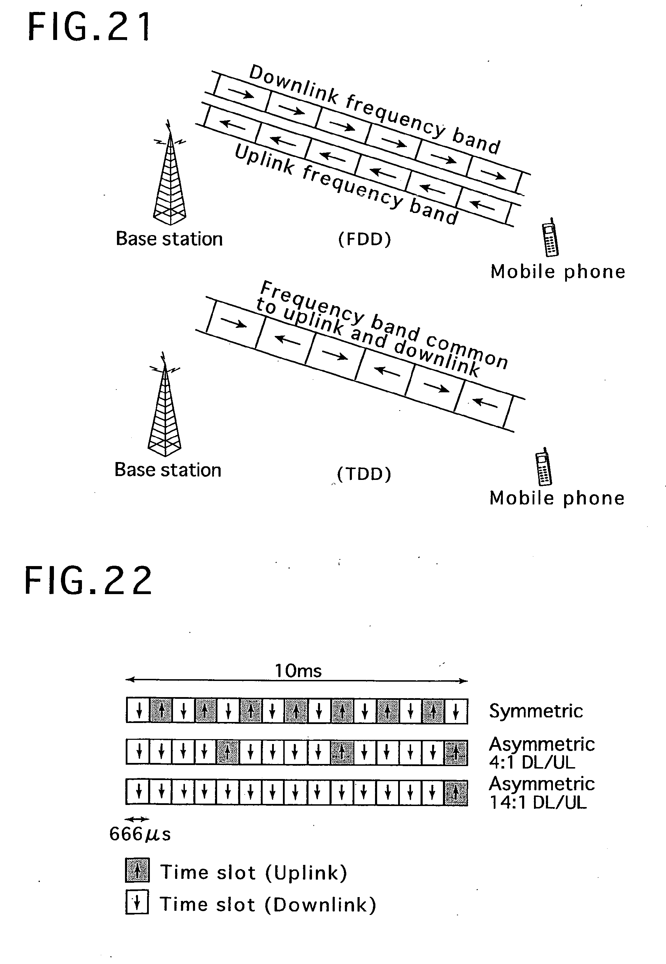

In the mobile communications network described above, communication between the mobile station and the base station is bi-directional, and the communication mode used is duplex mode in which transmitting and receiving between the sender and receiver are performed simultaneously. As shown in FIG. 21, duplex modes include FDD (Frequency Division Duplex) mode in which different frequency bands are used for the uplink from the mobile station to the base station and the downlink from the base station to the mobile station, and TDD (Time Division Duplex) mode in which the uplink and downlink use the same frequency band but switching is made between them in a very short time. In the TDD mode, one frame is divided into multiple (for example 15) time slots and either the uplink or downlink is assigned to each slot. FIG. 22 shows a frame configuration in TDD-CDMA (Code Division Multiple Access) which uses the TDD mode as the duplex mode. In the TDD-CDMA, the ratio and arrangement of time slots to be allocated to the uplink and downlink can be set based on traffic or the like as appropriate.

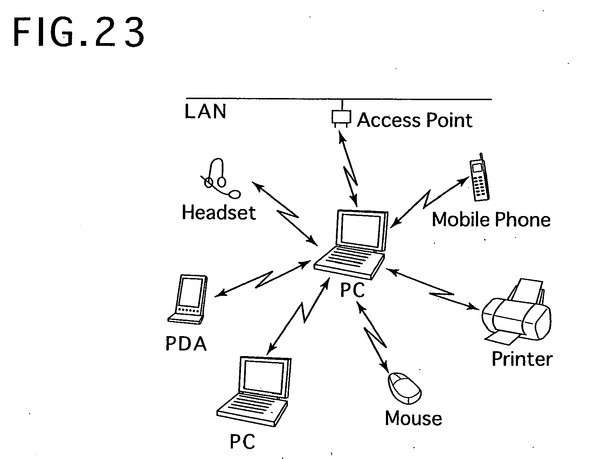

As a short-distance radio data communication network, there is known an ad-hoc network. In the ad-hoc network, radio communication apparatuses within the reach of their radio waves can directly communicate with each other without using a base station, as shown in FIG. 23. Accordingly, the ad-hoc network has an advantage that it eliminates the need for base stations or access points and therefore the network can be readily built in sites where such communication infrastructure is not available. As a communication technology for building such ad-hoc networks, Bluetooth and wireless LAN (IEEE 802.11x) have been proposed.

In the wireless LAN, two network modes have been provided: one is infrastructure mode in which communication is performed between a radio communication apparatus and an access point connected to a wired network, and the other is ad-hoc mode in which radio communication apparatuses directly communicate with each other. A star network topology is used in the infrastructure mode, whereas a mesh network topology is used in the ad-hoc mode.

The Bluetooth uses a star network topology in which multiple radio communication apparatuses called slave can be connected to a radio communication apparatus called master at the center. In the Bluetooth, the master controls and manages the entire network, and communications between slaves are performed through the master.

However, in the aforementioned wireless LAN, the number of nodes (the number of radio communication apparatuses) that can perform communications at once in ad-hoc mode is limited to two and therefore channels are used very inefficiently and, in addition, the channel capacity and transmission rate are low.

The Bluetooth, on the other hand, has a drawback that the master is a bottleneck to improvement of the efficiency of communication because all signals (control and data signals) are transmitted through the master. In addition, there is an inherent limit to improvement of the bandwidth and transmission rate of the entire network because multiple slaves communicate with the master in time division mode.

The aforementioned conventional ad-hoc network uses a communication system that differs from those used in mobile communications networks. Therefore, there is a problem that, when a radio communication apparatus capable of connecting to both of networks is implemented, its configuration would be complex and the costs would be high accordingly.

Furthermore, when a connection destination is switched from one network (for example, the ad-hoc network) to the other network (for example, the mobile communications network), there is a problem that much time is required for handover since their telecommunication systems are different from each other.

In addition, with the widespread use of IP networks based on TCP/IP today, there arises the issue of enabling seamless integration of an IP network with a mobile communications network and an ad-hoc network and there is a strong demand for improvement in the network use efficiency and economy by integration of such networks.

### Disclosure of the Invention

The present invention has been made in view of these circumstances and a first object of the present invention is to provide a radio communication apparatus and an ad-hoc system capable of improving the efficiency of communications in an ad-hoc network and improving the bandwidth utilization efficiency and transmission rate of the entire network.

A second object of the present invention is to provide a radio communication apparatus having the capability of connecting to both of an ad-hoc network and a mobile communications network without adding complexity of apparatus configuration and without adding costs, and yet being capable of smoothly switching a network to be connected.

A third object of the present invention is to provide a communication system and a radio communication apparatus capable of implementing seamless integration of a mobile communications network, an ad-hoc network, and an IP network without a great increase in cost and thereby improving the efficiency and economy of network use.

### [First aspect of the present invention]

In order to achieve the first object, a first aspect of the present invention provides, as stated in claim 1, a radio communication apparatus having ad-hoc communication means for building an ad-hoc network with other nearby radio communication apparatus and performing communication with the other radio communication apparatus by radio, wherein a radio communication apparatus that manages the entire ad-hoc network is a master and a radio communication apparatus that performs radio communication within the ad-hoc network under the management of the master is a slave, and wherein the ad-hoc communication means comprises: node type setting means for searching the ad-hoc network for the master and setting the node type of the radio communication apparatus to any of the master and slave on the basis of the search result; set-up information acquisition means for, when the node type of the radio communication apparatus is set to the slave, transmitting and receiving control signals to and from the master to acquire set-up information required for communication with any of the master and slave in the ad-hoc network and storing the set-up information in storage means; and data signal transmission means for directly transmitting and receiving data signals to and from any of the master and slave in the ad-hoc network in accordance with the set-up information acquired from the master.

Specifically, the radio communication apparatus may be an information terminal such as a mobile phone, a PDA (Personal Digital Assistance) or a personal computer, or a peripheral device of such information terminal (for example, a headset, a printer, a mouse and a display).

The control signals are signals transmitted between the master and the slave in building or maintaining the ad-hoc network. The control signals include a signal to which information such as the identification data of communication target, QoS (Quality of Service) and security level, is added. On the other hand, the data signals are signals for data, transmitted between nodes of the ad-hoc network and includes all signals other than the control signals.

The "set-up information required for communication" includes information concerning a communication channel, such as a spreading code and time slot used for communication.

For setting the node type of the radio communication apparatus, the node type setting means performs processing including: (1) mode switching processing for switching the communication mode to ad-hoc mode, (2) pilot signal measurement processing for measuring a pilot signal emitted from the master, and (3) node type setting processing for, when a pilot signal is detected as a result of the pilot signal measurement processing, setting the node type to slave, otherwise, setting Lhe node type to master. If the node type is set to slave in the node type setting processing, processing for periodically transmitting node information to the master through a common channel is performed. On the other hand, if node type is set to master, processing for repeatedly broadcasting a pilot signal at predetermined intervals and processing for monitoring for a communication request from slave are performed.

That is, as stated in claim 2, the ad-hoc communication means includes node information collecting means for, when the node type of the radio communication apparatus is set to the master, transmitting and receiving control signals to and from each slave in the ad-hoc network to collect node information of each slave; network information updating means for updating network information concerning the ad-hoc network on the basis of the collected node information of each slave and storing the updated network information in the storage means; and network information delivery means for delivering the network information to each slave in the ad-hoc network.

The node information includes identification data and address set on each radio communication apparatus which is a node of the ad-hoc network.

The network information includes the node information as well as information concerning network resources (for example, a frequency, spreading codes, and time slots to be used) and QoS parameters.

Furthermore, as stated in claim 3, the ad-hoc communication means may include set-up information transmittingmeans for, in response to a communication request from a slave in the ad-hoc network, allocating network resources on the basis of the network information stored in the storage means and transmitting set-up information in which the allocation of the network resources is specified to the slave that has issued the communication request, and wherein the network information updating means may update the network information on the basis of the set-up information and stores the updated network information in the storage means; and the network information delivery means may deliver the updated network information to each slave in the ad-hoc network.

Preferably, as stated in claim 4, the radio communication apparatus according to the first aspect of the present invention includes mobile communication means for performing communication with a base station of a mobile communications network by using TDD-CDMA system, wherein the ad-hoc communication means uses, in communication within the ad-hoc network, the same TDD-CDMA system that is used in the mobile communications network.

Here, TDD-CDMA is CDMA (Code Division Multiple Access) that uses TDD (Time Division Duplex) as a duplex mode. CDMA, Code Division Multiple Access, is one of multiple access communication systems using spread-spectrum technology. CDMA includes single-carrier mode, which uses a single carrier to perform transmission, and multi-carrier mode, which uses multiple carriers in order to reduce the influence of fading. TDD is duplex mode in which the uplink from a mobile station to a base station and the downlink from the base station to the mobile station use the same frequency band and switching is made between the uplink and downlink in a very short time. As a TDD-CDMA, TD-CDMA standardized by the 3GPP (3rd Generation Partnership Project) is known.

In order to achieve the first object mentioned above, an ad-hoc system according to the first aspect of the present invention, as stated in claim 5, includes a master and slaves, the master being a radio communication apparatus that manages an entire network and the slaves being radio communication apparatuses which perform radio communication under the management of the master, wherein the master comprises: node information collecting means for collecting node information of each slave by transmitting and receiving control signals to and from each slave in the ad-hoc network; network information updating means for updating network information concerning the ad-hoc network on the basis of the collected node information of each slave and storing the updated network information in storage means ; set-up information transmitting means for, in response to a communication request from a slave in the ad-hoc network, allocating network resources on the basis of the network information stored in the storage means and transmitting set-up information in which the allocation of the network resources is specified to the slave that has issued the communication request; and network information delivery means for delivering the network information to each slave in the ad-hoc network, and wherein the slave comprises: storage means for storing network information acquired from the master; set-up information acquisition means for, when the slave intends to initiate communication with any of the master and other slaves in the ad-hoc network, transmitting a communication request to the master to acquire the set-up information; and data signal transmission means for transmitting and receiving data signals to and from any of the master and other slaves in the ad-hoc network in accordance with the set-up information and the network information acquired from the master.

In the ad-hoc system described above, a radio network in a star topology at the center of which is the master can be formed for transmitting the control signals; and a radio network can be formed in a mesh topology for transmitting the data signals, as stated in claim 6.

According to the first aspect of the present invention, set-up information required for communication is provided from the master to the slaves by communicating control signals between the master and slaves and, based on the set-up information, data signals are directly communicated between nodes (between slaves or between the master and a slave) in the ad-hoc network. Consequently, the network assumes a star wireless network topology centered at the master for transmitting the control signals, whereas it assumes a mesh wireless network topology for transmitting the data signals. Accordingly, multiple nodes can perform communication (transmission and reception of data signals) simultaneously. Thus, the efficiency of communication in the ad-hoc network can be improved and the bandwidth and transmission rate of the entire network can be improved.

Furthermore, the network can be readily built and maintained. Thus, a highly scalable and flexible wireless network can be provided.

### [Second aspect of the invention]

In order to achieve the second and third objects, a second aspect of the present invention provides, as stated in claim 7, a communication system in which TDD-CDMA system is used for communication between a base station of a mobile communications network and a radio communication apparatus that acts as a mobile station; wherein the radio communication apparatus has ad-hoc communication means for building an ad-hoc network with other nearby radio communication apparatus and performing communication with the other radio communication apparatus by radio, and uses the same TDD-CDMA system and the same frequency band that are used in the mobile communications network, and wherein the radio communication apparatus includes, as radio interfaces, a first interface for performing communication with the base station, a second interface for performing communication with other radio communication apparatus in the ad-hoc network, and a third interface for relaying communication between other radio communication apparatus in the ad-hoc network and the base station; the radio communication apparatus is configured to be capable of connecting to an authentication server of an IP network as a client; and the authentication server has an interface for performing communication with a home location register of the mobile communications network.

Here, the "radio communication apparatus which acts as a mobile station" may be a mobile phone, or an information terminal, such as a PDA or a personal computer, that has function for connecting to the mobile communications network.

The "other nearby radio communication apparatus" may be a radio communication apparatus having function for connecting to the mobile communications network as described above, as well as an information terminal (such as a computer or a PDA) that does not have function for connecting to the mobile communications network, or a peripheral device of the information terminal (for example, a headset, a printer, a mouse or a display). Such radio communication apparatus has at least the capabilities of building an ad-hoc network with other radio communication apparatus within the reach of their radio waves and performing communication with the radio communication apparatus in the ad-hoc network.

That is, the ad-hoc communication means detects other nearby radio communication apparatus having the functions as described above, performs processing for acquiring information about the radio communication apparatus (for example, node information such as IDs and node types and information concerning communication channels such as spreading codes and time slots) from a particular radio communication apparatus (that is, master) and storing the information in storage means, and then communicates with the other radio communication apparatus in the ad-hoc network through a radio communication channel assigned by the particular radio communication apparatus (master).

The IP network may be the Internet or Intranet, for example. When a radio communication apparatus attempts to access the IP network, the authentication server of the IP network acquires user information (identification data and the password of a user) from the radio communication apparatus, validates the user on the basis of the user information and, when the validity of the user is successfully verified as a result of the validation, permits the radio communication apparatus to access the IP network, otherwise, rejects the access to the IP network. The validation can be accomplished by using any of the following methods: a method in which the authentication server may acquire authentication data (for example, a random number or a private key, or a function value using such data as an argument) corresponding to the user information from a home location register (HLR) and validates the user on the basis of the authentication data; or a method in which the authentication server may request the home location register to validate the user and then receive the result.

In order to achieve the second and third objects, a communication system according to the second aspect of the present invention, as stated in claim 8, includes: a base station of a mobile communications network; a radio communication apparatus which performs communication with the base station by using TDD-CDMA system; a management equipment which, when the radio communication apparatus attempts to access the mobile communications network, receives user information of the radio communication apparatus via the base station and validates a user of the radio communication apparatus on the basis of the user information; and an authentication server which is incorporated in an IP network; wherein the radio communication apparatus comprises ad-hoc communication means for building an ad-hoc network with other nearby radio communication apparatus and performing communication with the other radio communication apparatus by radio, the ad-hoc communication means using, in communication with the other radio communication apparatus in the ad-hoc network, the same TDD-CDMA system and the same frequency band that are used in the mobile communications network and having the function of relaying communication between the other radio communication apparatus in the ad-hoc network and the base station; the radio communication apparatus is configured to be capable of connecting to the authentication server as a client and, when connecting to the IP network through the authentication server, transmits the user information to the authentication server; and the authentication server has an interface for connecting to the management equipment and, upon receiving the user information from the radio communication apparatus, validates the user in cooperation with the management equipment, and when the user is successfully authenticated as a result of the validation, permits the radio communication apparatus to connect to the IP network.

In order to achieve the second and third objects, according to the second aspect of the present invention, as stated in claim 9, there is provided a radio communication apparatus which builds an ad-hoc network with other nearby radio communication apparatus, performs communication with the other radio apparatus by using any of TDD-CDMA, TDD-TDMA, and TDD-OFDM communication systems, and performs communication with a base station of a mobile communications network by using the same communication system and the same frequency band that are used in the communication with the other radio communication apparatus in the ad-hoc network, the radio communication apparatus comprising: relay means for relaying communication between the other radio communication apparatus in the ad-hoc network and the base station; and radio interfaces including a first interface for performing communication with the base station, a second interface for performing communication with the other radio communication apparatus in the ad-hoc network, and a third interface for relaying communication between the other radio communication apparatus in the ad-hoc network and the base station.

Here, TDD-TDMA is TDMA (Time Division Multiple Access) that uses TDD as a duplex mode. TDMA is a multiple access system in which same frequency band is shared by multiple transmitters for a short time in turn. Examples of systems that uses TDD-TDMA include PHS (Personal Handyphone System). TDD-OFDM system, on the other hand, is OFDM (Orthogonal Frequency Division Multiplexing) that uses TDD as a duplex mode. OFDM is a communication technique in which multiple carriers are arranged at frequency intervals so that spectra are orthogonal to each other. In this communication system, one or more carriers are assigned to each transmitter.

The radio communication apparatus according to the second aspect of the present invention, as stated in claim 10, may include ad-hoc communication means for performing communication with other radio communication apparatus in the ad-hoc network using the second interface, wherein the ad-hoc communication means comprises node type setting means for searching the ad-hoc network for a master and setting the node type of the radio communication apparatus to any of the master and slave on the basis of the search result; when the node type setting means sets the node type to master, the ad-hoc communication means acquires node information from each slave in the ad-hoc network, updates network information concerning the entire ad-hoc network on the basis of the node information, stores the updated network information in storage means and, in response to a capacity request from any of the slaves in the ad-hoc network, allocates a communication channel on the basis of the network information stored in the storagemeans and transmits an allocation message to the slave that has issued the capacity request; and when the node type setting means sets the node type to slave, the ad-hoc communication means transmits the node information to the master and, when performing communication with any of the master and slaves in the ad-hoc network, specifies any of the master and the slaves as a communication target in the capacity request, transmits the capacity request to the master, obtains the allocation message from the master, and then directly communicates with any of the master and slaves specified as the communication target in accordance with the allocation message.

Here, as stated in claim 11, in the transmission protocol of the second interface, for example, layer 3 of OSI (Open Systems Interconnection) reference model is composed of an RRC (Radio Resource Control) sub-layer, and layer 2 is composed of an RLC (Radio Link Control) sub-layer and an MAC (Medium Access Control) sub-layer; an SH-CCH (Shared Control Channel) and a DTCH (Dedicated Traffic Channel) are used as logical channels connecting the RLC sub-layer and the MAC sub-layer, an FACH (Forward Access Channel), an RACH (Random Access Channel) and a DCH (Dedicated Channel) are used as transport channels connecting the MAC sub-layer and layer 1, and an S-CCPCH (Secondary Common Control Physical Channel), a PRACH (Physical Random Access Channel) and a DPCH (Dedicated Physical Channel) are used as physical channels for communication between Layer 1 and nodes; and the SH-CCH, the RACH and the PRACH are mapped to channels for control signals from a slave to a master, the SH-CCH, the FACH and the S-CCPCH are mapped to channels for control signals from a master to a slave, and the DTCH, the DCH and the DPCH are mapped to channels for data signals.

The relay means, as stated in claim 12, the relay means may allocate a communication channel in cooperation with the base station, apply protocol conversion to signals received from one of the other radio communication apparatus in the ad-hoc network and the base station, and transmit the signals to the other through the communication channel.

In order to achieve the second and third objects, a communication system according to the second aspect of the present invention, as stated in claim 13, includes: a base station of a mobile communications network; a mobile station which performs communication with the base station by using TDD-CDMA system; a management equipment which, when the mobile station attempts to access the mobile communications network, receives user information of the mobile station via the base station and validates a user of the mobile station on the basis of the user information; and an authentication server of an IP network based on the TCP/IP, wherein the mobile station is configured to be capable of connecting to the authentication server as a client and, when connecting to the IP network through the authentication server, transmits the user information to the authentication server; and the authentication server has an interface for connecting to the management equipment and, upon receiving the user information from the mobile station, validates the user in cooperation with the management equipment and, when the user is successfully authenticated as a result of the validation, permits the mobile station to connect to the IP network.

Here, the management equipment is preferably a home location register having a subscriber database, as stated in claim 14.

The user information may be stored in an SIM card attached to the mobile station, as stated in claim 15.

The mobile station is preferably a radio communication apparatus which, as stated in claim 16 , builds an ad-hocnetwork with other nearby radio communication apparatus to perform communication with the other radio communication apparatus by radio, and the mobile station uses, in communication within the ad-hoc network, the same TDD-CDMA system and the same frequency band that are used in the mobile communications network.

Furthermore, as stated in claim 17, the mobile station may include relay means for relaying communication between the other radio communication apparatus in the ad-hoc network and the base station. Such mobile station has first, second, and third interfaces as radio interfaces, performs communication with the base station through the first interface, and performs communication with the other radio communication apparatus in the ad-hoc network through the second interface. The mobile station may perform communication with the base station through the third interface, when relaying communication between the other radio communication apparatus in the ad-hoc network and the base station.

According to the second aspect of the present invention, the same communication system is adopted and the same frequency band is used for communication within an ad-hoc network and a mobile communications network. Therefore, increases in complexity of apparatus configuration and costs can be avoided, networks to be connected are smoothly switched and seamless integration of the ad-hoc network and mobile communications network can be accomplished.

Furthermore, since TDD is used as a duplex mode, frequencies can be used effectively as compared with the case where FDD is used as a duplex mode, and the transmission rates of the uplink and downlink can be readily controlled by changing the ratio of time slots between the uplink and the downlink. Therefore, asymmetric data communication services which provide different transmission rates for uplink and downlink can be readily implemented as well.

Since radio communication apparatuses in the ad-hoc network directly communicate with each other, a load on the mobile communications network can be reduced and thereby the efficiency of communication on the entire network can be improved.

Moreover, the radio communication apparatus is provided with the interface for relaying communication between other radio communication apparatus in the ad-hoc network and the base station. Therefore, when a radio communication apparatus whose radio waves cannot reach the base station exists in the ad-hoc network, it can use other radio communication apparatus in the ad-hoc network whose radio waves can reach the base station as a relay device. Thus, the communication area of the radio communication apparatus whose radio wave does not reach the base station can be expanded.

Furthermore, since the authentication server is provided with the interface for communicating with the management equipment (home location register) of the mobile communications network, the mobile communications network and the IP network can share authentication information.

Thus, according to the second aspect of the present invention, seamless integration of a mobile communications network, an ad-hoc network, and an IP network can be accomplished without a great increase in cost, and thereby the efficiency and economy of network use can be improved.

### Brief Description of the Drawings

FIGS. 1A and 1B are schematic diagram showing one embodiment of an ad-hoc system according to the present invention;

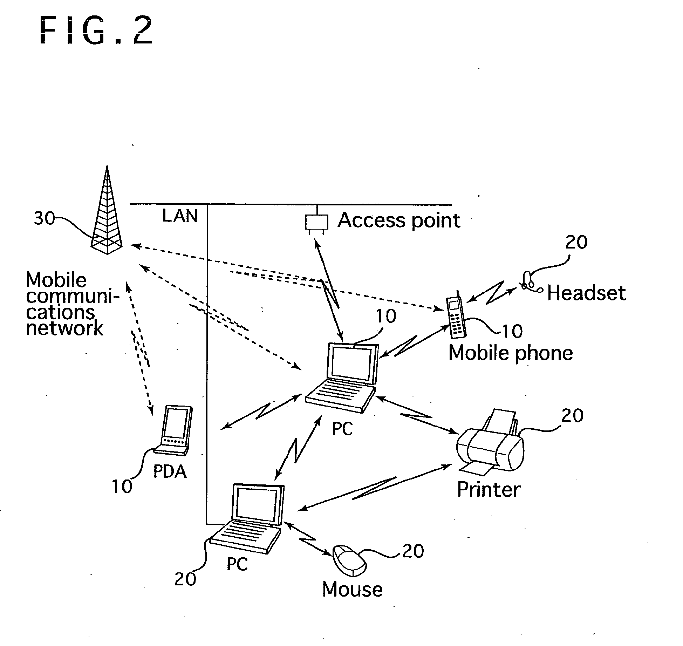

FIG. 2 is a schematic diagram showing a configuration of one embodiment of an ad-hoc network and a mobile communications network;
FIG. 3 is a block diagram showing main components of a first radio communication apparatus shown in FIG. 2;
FIG. 4 is a flowchart illustrating a process performed by the first radio communication apparatus shown in FIG. 3 for connecting to the ad-hoc network;
FIG. 5 shows a flow of signals transmitted when communication is performed between nodes in the ad-hoc network;
FIG. 6 is a block diagram showing functions of a master and a slave constituting the ad-hoc system shown in FIG. 1;
FIG. 7 is a conceptual diagram showing one embodiment of communication system according to the present invention;
FIG. 8 is a schematic diagram showing a configuration of the communication system shown in FIG. 7;
FIG. 9 is a block diagram showing main components of the first radio communication apparatus (mobile station) shown in FIG. 7;
FIG. 10 shows a configuration of a protocol stack used in communication within the ad-hoc network;
FIG. 11 is a flowchart of a process for setting up the ad-hoc network;
FIG. 12 shows a flow of signals transmitted when communication is performed within the ad-hoc network;
FIG. 13 shows a flow of signals when communication is relayed between a radio communication apparatus within the ad-hoc network and a UTRAN;
FIG. 14 shows a flow of signals when communication is relayed between a radio communication apparatus within the ad-hoc network and an IP network;
FIG. 15 is a block diagram showing functions of the master shown in FIGS. 13 and 14;
FIG. 16 shows transmission protocols used for accessing the mobile communications network through the master of the ad-hoc network;
FIG. 17 shows transmission protocols used in performing authentication of a slave through the master of the ad-hoc network;
FIG. 18 shows transmission protocols used for accessing the IP network through the master of the ad-hoc network;
FIG. 19 shows transmission protocols used in performing authentication of a slave through the master of the ad-hoc network and the IP network;
FIG. 20 is a schematic diagram showing a configuration of an exemplary mobile communications network;
FIG. 21 shows a schematic diagram illustrating TDD and FDD modes;
FIG. 22 shows an exemplary frame structure of TDD-CDMA; and
FIG. 23 is a schematic diagram showing a configuration of an exemplary ad-hoc network.

### Best Mode for Carrying Out the Invention

### [First embodiment]

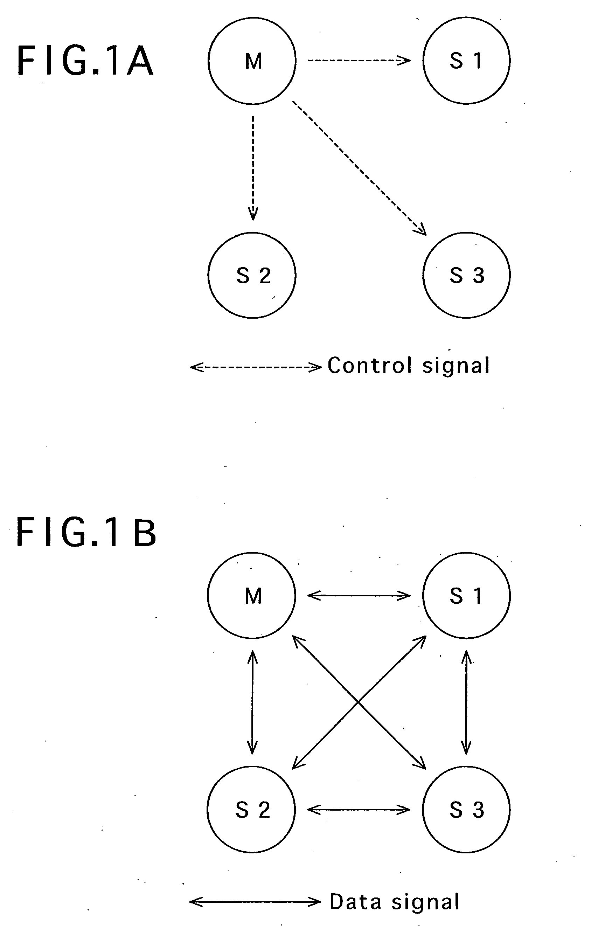

FIG. 1 shows an embodiment of an ad-hoc system according to the present invention, in which symbol M denotes a node set as a master and symbols S1 - S3 denote nodes set as slaves. In the ad-hoc system, set-up information required for communication (such as a spreading code and a time slot) is provided from the master M to slaves S1 - S3 by transmitting and receiving control signals between the master M and slaves S1 - S3 , and data signals are directly transmitted and received between nodes (for example, between slaves S1 and S2 or between slave S1 and the master M) within the ad-hoc network in accordance with the set-up information. That is, the network assumes a star wireless network topology centered at the master M as shown in FIG. 1A for transmitting control signals whereas it assumes a mesh wireless network topology as shown in FIG. 1B for transmitting the data signals.

Specifically, the master M and slaves S1 - S3 may be various types of radio communication apparatus such as a mobile phone, an information terminal (such as a PDA and a personal computer), or a peripheral device (such as a headset, a printer and a mouse) of the information terminal. Such radio communication apparatuses include first radio communication apparatus 10 having the function (mobile communication means) for connecting to a base station 30 of a mobile communications network, and second radio communication apparatus 20 without the function for connecting to the base station 30 of the mobile communications network.

The first and second radio communication apparatuses 10, 20 have ad-hoc communication means for building an ad-hoc network with other nearby radio communication apparatuses 10, 20 and performing communication with the other radio communication apparatus . The same TDD-CDMA system is adopted and the same frequency band is used for communication in the ad-hoc network and communication in the mobile communications network. Furthermore, communication within the ad-hoc network is performed in synchronization with the communication in the mobile communications network.

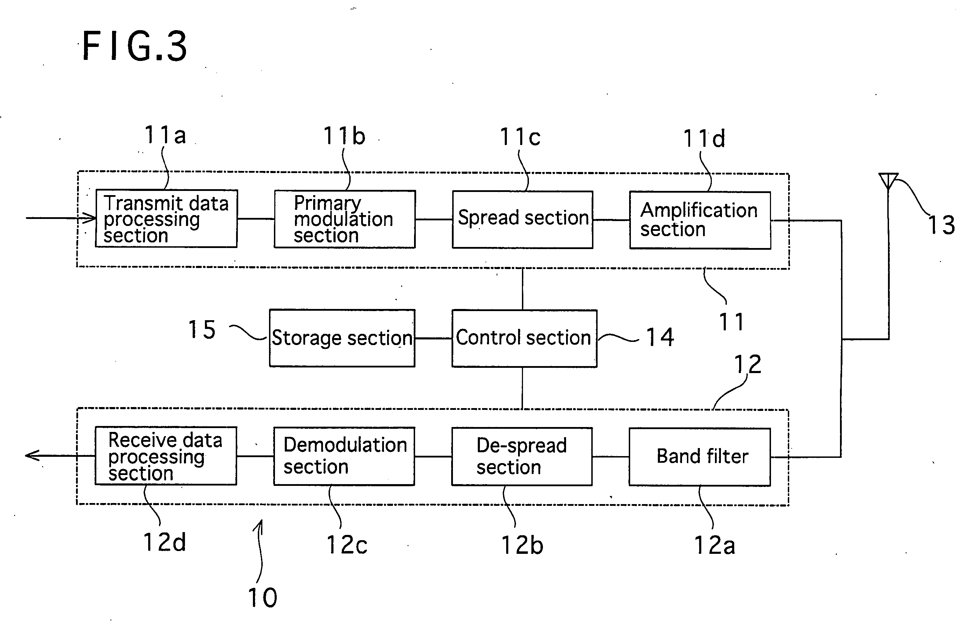

FIG. 3 is a block diagram showing configuration of main components of the first radio communication apparatus. As shown in FIG. 3, the first radio communication apparatus 10 has a transmitter 11, a receiver 12, an antenna 13, a control section 14 and a storage section 15.

The transmitter 11 is provided with a transmit data processing section 11a for generating a transmit signal, a primary modulation section 11b for performing primary modulation of a carrier wave with the transmit signal, a spread section 11c for performing spread modulation (secondary modulation) of the modulated signal obtained by the primary modulation with a spreading code (an orthogonal spreading code), and an amplification section 11d for amplifying the spread-modulated signal. That is, the transmit signal generated by the transmit data processing section 11a is primary-modulated in a predetermined modulation mode at the primary modulation section 11b, then spread-modulated with a spreading code at the spread section 11c, then amplified at the amplification section 11d, and then emitted from the antenna 13 as a radio wave.

The receiver 12 is provided with a band filter 12a for removing an unnecessary noise component included in a receive signal received from the antenna 13, a de-spread section 12b for de-spreading the receive signal, which has passed the band filter 12a, with a spreading code, a demodulation section 12c for demodulating a signal obtained by the de-spreading, and a receive data processing section 12d for performing various processing based on the demodulated signal. That is, the receive signal received by the antenna 13 is de-spread by the same spreading code as used by the transmitting side after a noise component is removed by the band filter 12a, and then, it is demodulated at the demodulation section 12c to be returned to a baseband wave.

The control section 14 controls the transmitter 11 and the receiver 12 based on various information stored in the storage section 15. Switching control between transmitting and receiving, transmit power control, switching control and synchronization control between the ad-hoc network and the mobile communications network, and the like are performed by this control section 14. For example, in the case of communicating with the base station 30 in the mobile communications network or other radio communication apparatus within the ad-hoc network via a wireless line, switching between transmitting and receiving is performed based on preset assignment of time slots, and thereby the communication is performed in a TDD mode. In the case of communicating with other radio communication apparatus within the ad-hoc network, the timing of communication with other radio communication apparatus is set so that it corresponds to the communication timing in the mobile communications network, based on information for synchronization received from the base station 30. Furthermore, in the case of communication with that other radio communication apparatus within the ad-hoc network, the interference level is detected from a receive signal inputted into the receiver 12, and transmit power is adjusted based on the interference level.

In this embodiment, ad-hoc communication means according to the present invention is configured by the transmitter 11, the receiver 12, the antenna 13, the control section 14, the storage section 15 and the like.

The second radio communication apparatus 20 also has a transmitter, a receiver, an antenna, a control section and a storage section similar to those of the above-described first radio communication apparatus 10 and is capable of communicating with other radio communication apparatus within the ad-hoc network by means of these communication means without intervening of the base station 30.

A process performed by the first radio communication apparatus 10 having the above configuration for connecting to an ad-hoc network will be described below. In the following description, the radio communication apparatus 10 is referred to as node X.

This process starts for example when the SIR (Signal to Interference Ratio) on the ad-hoc network is higher than that on the mobile communications network or when communication mode is switched to the ad-hoc mode.

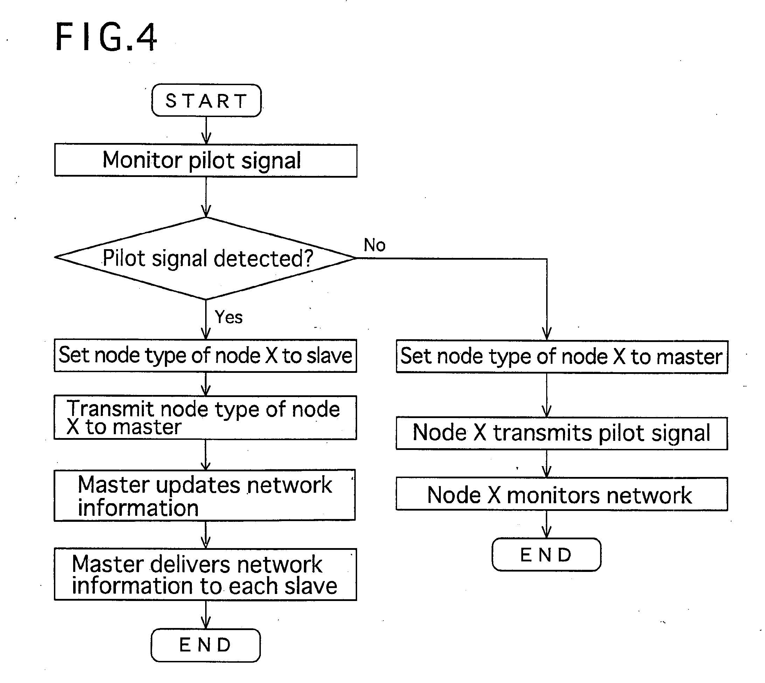

First, node X searches the ad-hoc network for a master and sets its node type to master or slave on the basis of the search result (node type setting means). Specifically, node X performs processing for detecting a pilot signal originated from the master and, if it detects a pilot signal, then sets its node type to slave as shown in FIG. 4. Otherwise, node X sets its node type to master.

If node X sets its node type to slave, then node X uses a preset common channel to send node information (such as the ID and address of node X) to the master. Upon receiving the node information from node X (node information collecting means), the master updates network information (such as node information on each slave and information concerning network resources and QoS parameters) in the storage section (storage means) on the basis of the node information (network information updating means), then delivers the network information to the slaves (including node X) in the ad-hoc network (network information delivery means). As a result, node X is included in the ad-hoc network as a slave.

On the other hand, if node X sets its node type to master, then node X repeatedly broadcasts a pilot signal at predetermined intervals, and periodically performs processing for updating the network information and processing for detecting the communication status of the slaves while monitoring control signals outputted from slaves. Eventually, an ad-hoc network is built, in which node X acts as the master and the ad-hoc network is managed and maintained by node X.

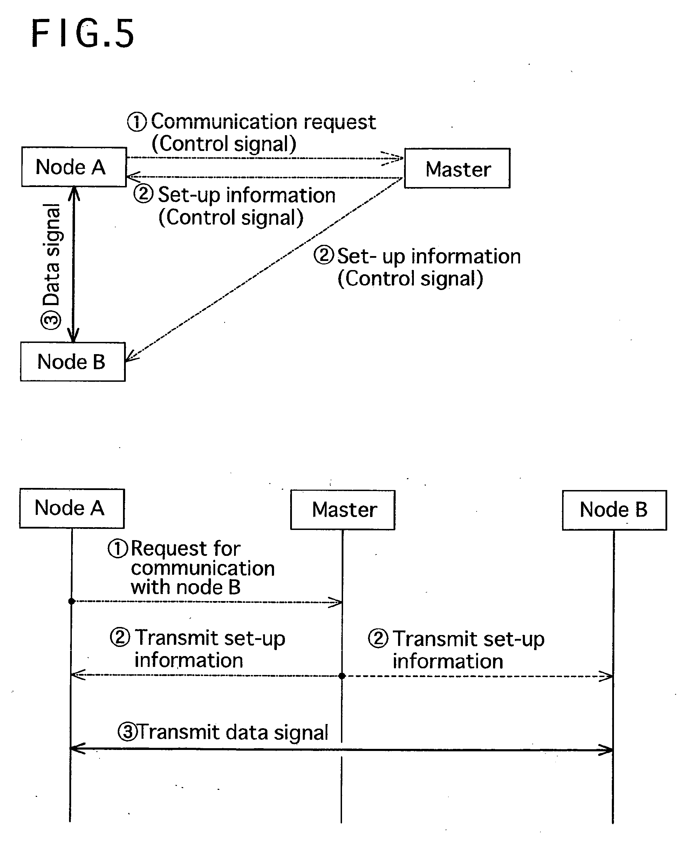

A process for performing communication between nodes within the ad-hoc network thus built will be described below. For example, when node A that is set to slave initiates communication with node B, node A specifies the ID of node B with which node A attempts to communicate, and transmits a communication request message to the master, as shown in FIG. 5. In response to this message, the master performs processing for referring to network information in its storage section to see the status of node B and see network resources (such as frequency bands, spreading codes (CDMA codes), and time slots) that can be used for the communication, allocating the most efficient communication channel (including a spreading code and time slot) as the dedicated channel between nodes A and B on the basis of information such as SIR, QoS, and traffic, and then transmitting set-up information in which allocation of network resources such as the communication channel is specified to the slave that has issued the communication request (set-up information transmitting means). At the same time, the master performs processing for updating network information on the basis of the set-up information and storing the updated network the information in the storage section and processing for delivering the updated network information to the slaves in the ad-hoc network.

Upon receiving the set-up information required for communication with node B from the master, node A stores the set-up information in its storage section (set-up information acquisition means), and then starts to directly transmit and receive data signals to and from node B in accordance with the set-up information (data signal transmission means).

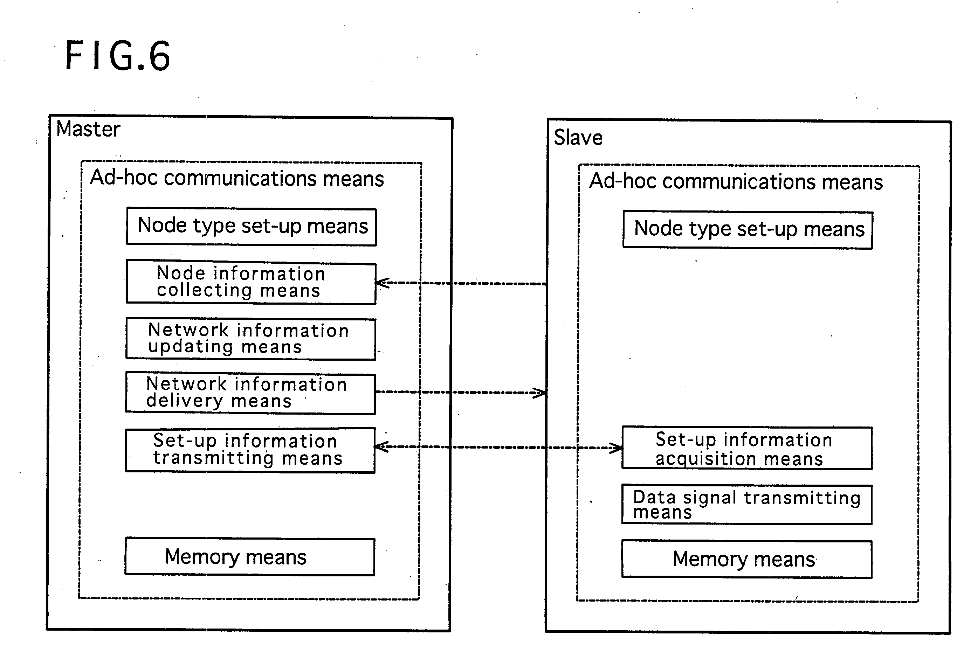

That is, the radio communication apparatus 10 in the first embodiment has node type setting means for setting the node type of the radio communication apparatus to either master or slave. If it is set to master by the node type setting means, the radio communication apparatus implements the functions of the node information collecting means, network information updating means, network information delivery means, and set-up information transmitting means as shown in FIG. 6. On the other hand, if it is set to slave by the node type setting means, the radio communication apparatus implements the functions of the set-up information acquisition means and data signal transmitting means as shown in FIG. 6.

As has been described above, according to the first embodiment, set-up information required for communication is provided from a master to a slave through exchange of control signals between the master and slaves, data signals are transmitted and received directly between the nodes (between slaves and between a slave and the master) in the ad-hoc network according to the set-up information, and thereby communications (transmitting and receiving data signals) can be performed by the multiple nodes at a time. Consequently, the efficiency of communication in the ad-hoc network can be improved and the bandwidth and transmission rate of the entire network can be improved.

When the node type of a radio communication apparatus is set to master, the master apparatus transmits and receives control signals to and from slaves in the ad-hoc network to collect node information on the slaves, updates network information on the basis of the node information, and delivers the updated network information to the slaves in the ad-hoc network, thereby the network can be readily built and maintained. Thus, a highly scalable and flexible wireless network can be provided.

Furthermore, since radio communication apparatuses 10, 20 in the ad-hoc network directly communicate with each other, a load on the mobile communications network can be reduced and thereby network resources can be efficiently used.

Furthermore, in the case where radio waves do not reach the base station 30, other radio communication apparatuses 10 and 20 within the ad-hoc network, the radio waves of which reach the base station 30, can be used as a relay apparatus, and as a result, the area in which connection to the mobile communications network is possible can be enlarged.

Moreover, since a common TDD-CDMA system is adopted and the same frequency band is used for communication in an ad-hoc network and in a mobile communications network, it is possible to provide a radio communication apparatus 10 capable of connecting to both of the ad-hoc network and the mobile communications network, in a simple configuration and at a low cost.

In addition, since communication in each of the ad-hoc network and the mobile communications network is performed while synchronization between the networks is maintained, the orthogonality of spreading codes is not lost even though the ad-hoc and mobile communications networks use the same frequency band. Therefore, interference between the ad-hoc network and the mobile communications network can be minimized and a good communication state can be ensured in both networks.

### [Second embodiment]

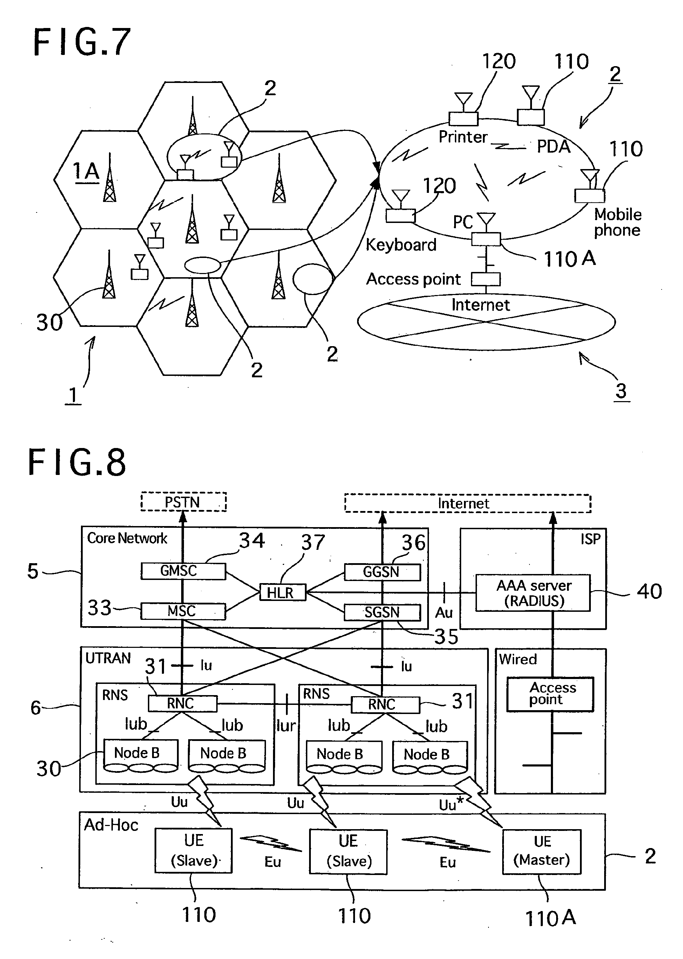

FIG. 7 is a conceptual diagram of a communication system according to the present invention, in which reference numeral 1 denotes a mobile communications network and reference numeral 2 denotes an ad-hoc network.

The mobile communications network 1 uses a UMTS (Universal Mobile Telecommunications System) architecture and includes a core network 5, a UMTS Terrestrial Radio Access Network (UTRAN) 6, and mobile stations (user equipment: UE) 110. An Iu interface is used between the core network 5 and the UTRAN 6, and a Uu interface is used between the UTRAN 6 and the mobile stations 110.

The core network 5 includes a Mobile Switching Center (MSC) 33 which routes calls, a Gateway Mobile Switching Center (GMSC) 34 which provides an interface to a network such as a Public Switched Telephone Network (PSTN), a Serving GPRS Support Node (SGSN) 35 which manages the location and security of the mobile stations, and a Gateway GPRS support Node (GGSN) 36 which functions as a gateway to an IP network 3, a Home Location Register (HLR) 37 having a subscriber database, and an Authentication Center (AuC) which performs authentication and the like of mobile stations in cooperation with the HLR 37.

The UTRAN 6 consists of multiple Radio Network Subsystems (RNS), each including Radio Network Controller Equipment (RNC) 31 and multiple base stations (Node B) 30 connected to the RNC 31. Each base station 30 is assigned a communication area called a cell 1A, and mobile stations 110 existing in the cell 1A communicate with the base station 30 by radio. TDD-CDMA is used for the communication.

An ad-hoc network 2 is a small network that enables radio communication apparatuses in a particular local area to communicate directly with each other without the use of the base station 30 or access points. As in the first embodiment, the radio communication apparatuses that constitute the ad-hoc network 2 include first radio communication apparatus 110 that has the function of communicating with the base station 30 of the mobile communications network 1 and also can function as a mobile station of the mobile communications network 1, and second radio communication apparatus 120 that does not have the function of communicating with the base station 30 of the mobile communications network 1, as shown in FIG. 7. The first radio communication apparatus 110 is an apparatus such as a personal computer, a PDA or a mobile phone that has the aforementioned communication function; the second radio communication apparatus 120 is an information terminal such as a personal computer or a workstation, or a peripheral device (for example, a headset, a printer or a mouse) of such information terminal.

These first and second radio communication apparatuses 10 and 20 have an ad-hoc communication function for constructing an ad-hoc network with other radio communication apparatuses 10 and 20 existing around them so that the radio communication apparatuses within the ad-hoc network 2 mutually communicate with one other . The same TDD-CDMA system is adopted and the same frequency band is used for communication in the ad-hoc network 2 and communication in the mobile communications network1. Furthermore, communication within the ad-hoc network 2 is performed in synchronization with the communication in the mobile communications network 1. The first radio communication apparatus 110 has the function of relaying communication between other radio communication apparatus in the ad-hoc network 2 and the base station 30.

The first radio communication apparatus 110 includes a radio communication apparatus 110A configured so as to be capable of connecting, as a client, to the authentication server of an IP network (the Internet or an intranet) 3. The radio communication apparatus 110A is connected to, for example, an access point of an internet service provider (ISP) which provides internet access services through telephone network, ISDN, ADSL, CATV or a private line, and can connect to the Internet through an Authentication Authorization Accounting (AAA) server 40 of the ISP, as shown in FIG. 8. The AAA server 40 is equipped with an Au interface as the interface with the home location register 37. For example, when a first radio communication apparatus 110 accesses the mobile communications network 1 or the IP network 3, user information and authentication data of the first radio communication apparatus 110 is exchanged between the AAA server 40 and the HLR 37 through the Au interface, and Subscriber Identity Module (SIM) authentication is performed.

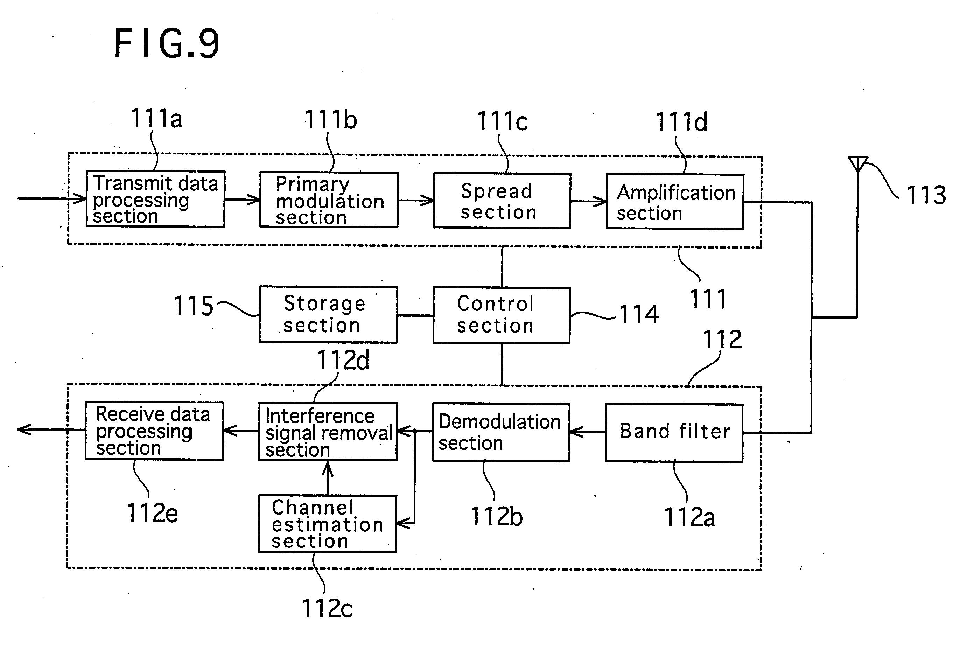

FIG. 9 is a block diagram showing main components of the first radio communication apparatus. As shown in FIG. 9, the radio communication apparatus 110 has a transmitter 111, a receiver 112, an antenna 113, a control section 114, and a storage section 115. While not shown, the first radio communication apparatus 110 is equipped with an SIM card containing information such as the International Mobile Subscriber Identity (IMSI) of a user.

The transmitter 111 is provided with a transmit data processing section 111a for generating a transmit signal, a primary modulation section 111b for performing primary modulation of a carrier wave with the transmit signal, a spread section 111c for performing spread modulation (secondary modulation) of the modulated signal obtained by the primary modulation with a spreading code (an orthogonal spreading code), and an amplification section 111d for amplifying the spread-modulated signal. That is, a transmit signal generated by the transmit data processing section 111a is primary-modulated in a predetermined modulation mode at the primary modulation section 111b, then spread-modulated with a spreading code at the spread section 111c, then amplified at the amplification section 111d, and then emitted from the antenna 113 as a radio wave.

The receiver 112 is provided with a band filter 112a for removing an unnecessary noise component included in a receive signal received from the antenna 113, a demodulation section 112b for demodulating the receive signal which has passed the band filter 112a to a baseband signal, a channel estimation section 112c for determining a channel estimate from a midamble included in the baseband signal, an interference signal removal section (interference signal removal means) 112d for removing interference signals by means of joint detection with the use of the channel estimate and the spreading code of each radio communication apparatus, and a receive data processing section 112e for performing various processings based on the demodulated signal from which interference signals have been removed. To each of the radio communication apparatuses 110 and 120, there is assigned a specific midamble so that a channel estimate of each radio communication apparatus can be derived from a midamble included in a receive signal. The interference signal removal section 112d is adapted to generate a system matrix by performing convolution multiplication of the spreading code assigned to each radio communication apparatus in advance and the above-described channel estimate, and obtain a demodulated signal by multiplying the baseband signal by the inverse of the system matrix.

The control section 114 controls the transmitter 111 and the receiver 112 based on various information stored in the storage section 115. Switching control between transmitting and receiving, transmit power control, switching control and synchronization control between the ad-hoc network and the mobile communications network, and the like are performed by the control section 114. For example, in the case of communicating with the base station 30 in the mobile communications network 1 or other radio communication apparatus within the ad-hoc network 2 via a wireless line, switching between transmitting and receiving is performed based on assignment of time slots which has been specified in advance, and thereby the communication is performed in a TDD mode.

In starting communication with other radio communication apparatus within the ad-hoc network 2, the power of interference signals is measured for each of time slots specified for the uplink and the downlink transmission of the mobile communications network 1, and processing for selecting time slots to be used for communication within the ad-hoc network 2 is performed based on the measured values. In the case of communicating with other radio communication apparatus within the ad-hoc network 2, the timing of communication with that other radio communication apparatus is set so that it corresponds to the communication timing in the mobile communications network 1, based on information for synchronization received from the base station 30. Furthermore, in the case of communicating with that other radio communication apparatus within the ad-hoc network 2, the interference level is detected from a receive signal inputted into the receiver 112 so that transmit power is adjusted based on the interference level.

In the present embodiment, the transmitter 111, the receiver 112, the antenna 113, the control section 114, the storage section 115 and the like constitute ad-hoc communication means of the present invention.

The second radio communication apparatus 120 also has a transmitter, a receiver, an antenna, a control section, and a storage section similar to those of the first radio communication apparatus 110 and is capable of communicating with other radio communication apparatus in the ad-hoc network 2 through a radio channel without the use of the base station 30.

As shown in FIG. 8, a Uu interface (first interface) is used as a radio interface for communication between the first radio communication apparatus 110 and the base station 30 whereas an Eu interface (second interface) is used as a radio interface for communicationbetween radio communication apparatuses 110, 120 in the ad-hoc network 2. When a radio communication apparatus set as the master of the ad-hoc network 2 relays communication between a radio communication apparatus set as a slave and the base station 30, a Uu* interface (third interface), which is an extended version of the Uu interface, is used for communication between the master radio communication apparatus and the base station 30.

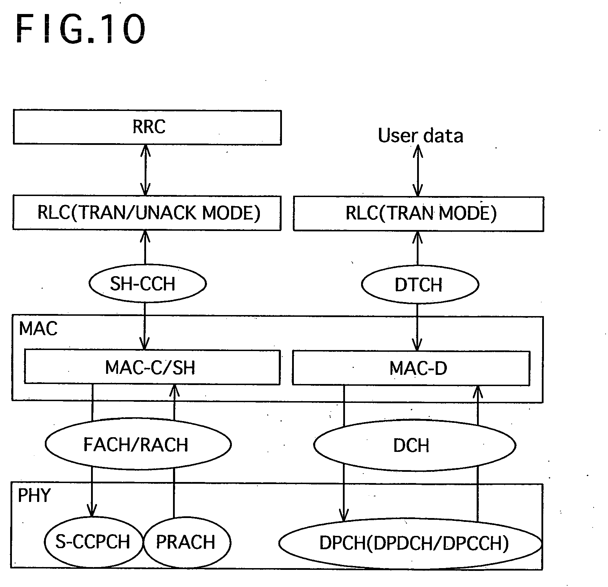

The Eu interface is a radio interface newly provided for the ad-hoc network 2. As shown in FIG. 10, in the transmission protocol stack for this radio interface, layer. 3 (the network layer) is composed of a Radio Resource Control (RRC) sub-layer, and layer 2 (the data link layer) is composed of a Radio Link Control (RLC) and a Medium Access Control (MAC) sub-layers. The RLC layer and the MAC layer are interlinked through logical channels, and the MAC layer and layer 1 (the physical layer) are interlinked through transport channels. Communications between layer 1 and nodes are performed through physical channels, as shown in FIG. 10.

A Shared Control Channel (SH-CCH) and a Dedicated Traffic Channel (DTCH) are used as the logical channel, a Forward Access Channel (FACH), a Random Access Channel (RACH), and a Dedicated Channel (DCH) are used as the transport channels, and a Secondary Common Control Physical Channel (S-CCPCH), a Physical Random Access Channel (PRACH), and a Dedicated Physical Channel (DPCH) are used as the physical channels.

The SH-CCH, the RACH, and the PRACH are associated with each other as channels for control signals from slaves to the master, and the SH-CCH, the FACH, and the S-CCPCH are associated with each other as channels for control signals from the master to slaves. The DTCH, the DCH, and the DPCH are associated with each other as data signal channels between nodes.

For the SH-CCH, in the case of traffic from a slave to the master (that is, when the RACH is mapped), transparent transmission mode is selected in the RLC and therefore an RLC header is unnecessary. In the case of traffic from the master to a slave (that is, when the FACH is mapped), on the other hand, unacknowledged transmission mode is selected in the RLC and therefore an RLC header is required. A MAC header is also unnecessary for the SH-CCH, since the SH-CCH is a channel that is mapped only to the RACH and the FACH in the MAC layer.

On the other hand, a contiguous data stream in the DTCH is segmented into transmission blocks in the RLC layer and then mapped to the DCH in the MAC layer. When the DTCH is not multiplexed in the MAC layer, transparent transmission mode is selected in the RLC and MAC layers and protocol control information is not added, therefore neither the RLC header nor the MAC header is necessary. However, when the DTCH is multiplexed in the MAC layer, the MAC header is required.

A process for setting up an ad-hoc network 2 will be described below. In the following description, a radio communication apparatus 110 is denoted by node X.

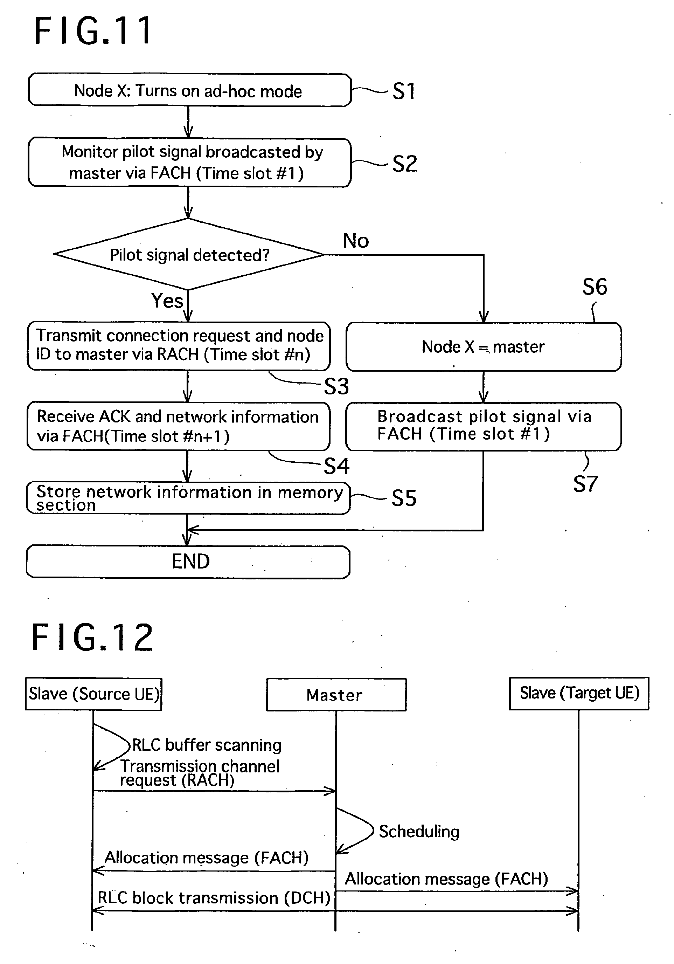

As shown in FIG. 11, the process is started when communication mode is switched to ad-hoc mode (step S1) or when the SIR (Signal to Interference Ratio) of the ad-hoc network 2 is higher than that of the mobile communications network 1.

First, node X performs processing for searching the ad-hoc network 2 for a master and, on the basis of the search result, setting the node type of node X to master or slave (node type settingmeans) . That is, node X performs processing for detecting a pilot signal (control signal) broadcasted from a master via the FACH (step S2). If node X has detected a pilot signal, node X sets its node type to slave; otherwise it sets its node type to master (step S6).

If the node type is set to slave, then node X performs processing for transmitting a network connection request and node information (such as the ID and address of node X) to the master with the use of the RACH (step S3).

After receiving the network connection request and node information from node X, the master updates network information (such as node information of the slaves and the master, scrambling and channelization codes used, and information about common channels) in its storage section (storage means) according to the node information received from node X. Upon receiving ACK (acknowledgement) from the master through the FACH (step 4), node X performs processing for acquiring the network information from the master and storing it in its storage section (step 5). With this processing, node X is incorporated into the ad-hoc network 2 as a slave.

On the other hand, if the node type is set to master, node X performs processing for repeatedly broadcasting a pilot signal through the FACH at a predetermined interval (step S7), updating the network information periodically, and detecting the communication status of slaves while monitoring control signals outputted from the slaves. Thus, an ad-hoc network 2 with node X as the master is built, and then the ad-hoc network 2 is maintained and managed by node X.

A transmission process performed for transmitting data signals in the ad-hoc network 2 thus built will be described below.

For example, when a radio communication apparatus (Source UE) set to slave detects a packet waiting to be transmitted in a buffer of the RLC, the radio communication apparatus first performs processing for transmitting a capacity request to the master through the RACH as shown in FIG. 12.

In response to this request, the master refers to the network information in its storage section, allocates a communication channel for DCH by using a scheduling function of the RRC and transmits an allocation message to each of the radio communication apparatus (Source UE) and an intended radio communication apparatus (Target UE) through the FACH.

Upon receiving the allocation message from the master, the radio communication apparatuses (Source UE and Target UE) directly transmit and receive date signals (RLC blocks) by using DCH allocated as a communication channel.

Network resources allocated as the communication channel include time slots and spreading codes. A TDD-CDMA radio frame is divided into a plurality of time slots. In this example, 15 time slots (ST1 - ST15) are provided. Two types of spreading codes, namely scrambling codes and channelization codes, are used. A scrambling code is an identification code assigned to each cell 1A of the mobile communications network 1. A scrambling code different from the codes assigned to the cells 1A is assigned as a common identification code for ad-hoc networks 2. On the other hand, Orthogonal Variable Spreading Factor (OVSF) codes with a spreading factor of 16 are used as the channelization codes used in the ad-hoc network 2. A number of channelization codes (for example 16) are reserved beforehand and some of the channelization codes are assigned for control signals and the others are assigned for data signals.

A process performed by the master for relaying communication between other radio communication apparatus in the ad-hoc network 2 and the base station 30 (UTRAN 6) will be described below.

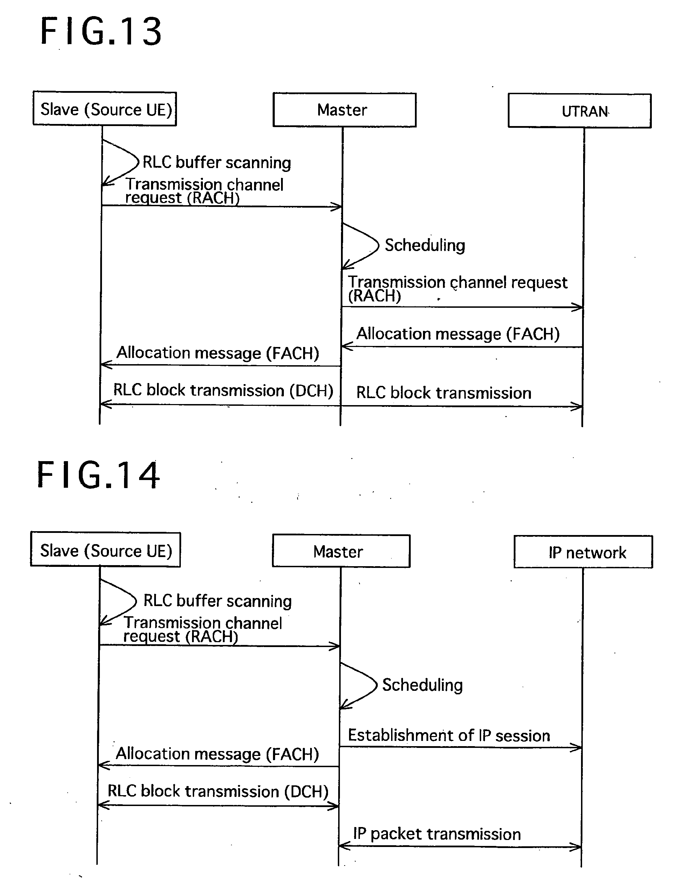

For example, when a radio communication apparatus set as a slave (Source UE) detects in the buffer of the RLC a packet waiting to be transmitted to the UTRAN 6, the radio communication apparatus (Source UE) first transmits a capacity request to the master by using the RACH, as shown in FIG. 13.

In response to this request, the master refers to network information in its storage section, allocates a communication channel for DCH by using the scheduling function of the RRC, and transmits a capacity request to the UTRAN 6 by using the RACH.

The UTRAN 6 allocates a communication channel for DCH by using its scheduling function and transmits an allocation message to the master by using the FACH.

Then, the master transmits an allocation message to the radio communication apparatus (Source UE) by using the FACH.

Upon receiving the allocation message from the master, the radio communication apparatus (Source UE) uses the communication channel allocated by the master to transmit and receive data signals (RLC blocks) to and from the master via DCH. When the master receives a data signal directed to the UTRAN from the radio communication apparatus (Source UE), the master uses the communication channel allocated by the UTRAN 6 to transfer the received data signal to the UTRAN 6. When the master receives a data signal directed to the radio communication apparatus (Source UE) from the UTRAN 6, the master uses the communication channel that the master itself has allocated to transfer the received data signal to the radio communication apparatus (Source UE) via DCH. Thus, data signals transmitted and received between the radio communication apparatus (Source UE) and the UTRAN 6 are relayed by the master.

A process in which the master in the ad-hoc network 2 relays communication between other radio communication apparatus in the ad-hoc network 2 and the IP network 3 will be described below.

For example, when a radio communication apparatus (Source UE) set as a slave detects the presence of a packet waiting to be transmitted to the IP network 3 in the buffer of the RLC, the radio communication apparatus (Source UE) first transmits a capacity request to the master through the RACH as shown in FIG. 14.

In response to this request, the master establishes a session with the IP network 3, refers to network information in its storage section, allocates a communication channel for DCH by using the scheduling function of the RRC, then transmits an allocation message to the radio communication apparatus (Source UE) by using FACH.

Upon receiving the allocation message from the master, the radio communication apparatus (Source UE) uses the communication channel allocated by the master to transmit and receive data signals (RLC blocks) via DCH. When the master receives a data signal (RLC blocks) directed to the IP network 3 from the radio communication apparatus (Source UE), the master applies protocol conversion to the received data signal from a radio communication protocol to an IP protocol and then transmits it as IP packets to the IP network 3. On the other hand, when the master receives a data signal (IP packets) directed to the radio communication apparatus (Source UE) from the IP network 3, the master applies protocol conversion to the received data signal from the IP protocol to the radio communication protocol and then transmits it as RLC blocks to the radio communication apparatus (Source UE). Thus, data signals transmitted and received between the radio communication apparatus (Source UE) and the IP network 3 are relayed by the master.

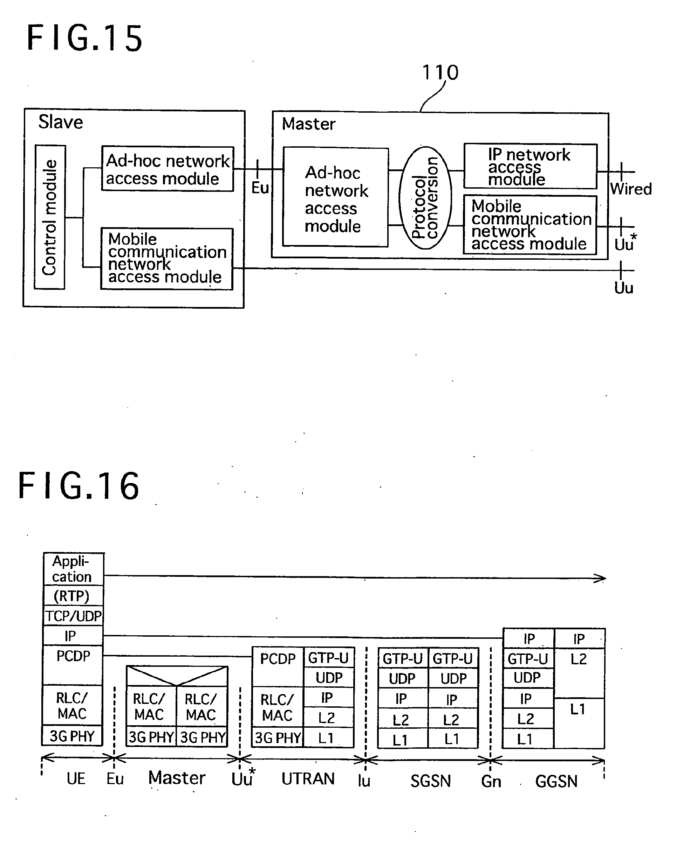

That is, the radio communication apparatus 110 set as the master includes a module for connecting to the mobile communications network 1, a module for connecting to the ad-hoc network 2, a module for connecting to the IP network 3, a module for protocol conversion between the ad-hoc network 2 and the mobile communications network 1, and a module for protocol conversion between the ad-hoc network 2 and the IP network 3, as shown in FIG. 15. A Uu* interface is provided for the module for connecting to the mobile communications network 1 , an Eu interface is provided for the module connecting to the ad-hoc network 2, and a wired interface is provided for the module connecting to the IP network 3.

A transmission protocol used for a radio communication apparatus 110 to access a network other than an ad-hoc network 2 will be described below.

First, when a radio communication apparatus 110 directly accesses the mobile communications network 1, the radio communication apparatus 110 is placed in cellular communication mode and the Uu interface is used for communication with the base station 30. In this case, a standard communication protocol and authentication mechanism in the UMTS are used so that the radio communication apparatus 110 becomes independent of the ad hoc network 2.

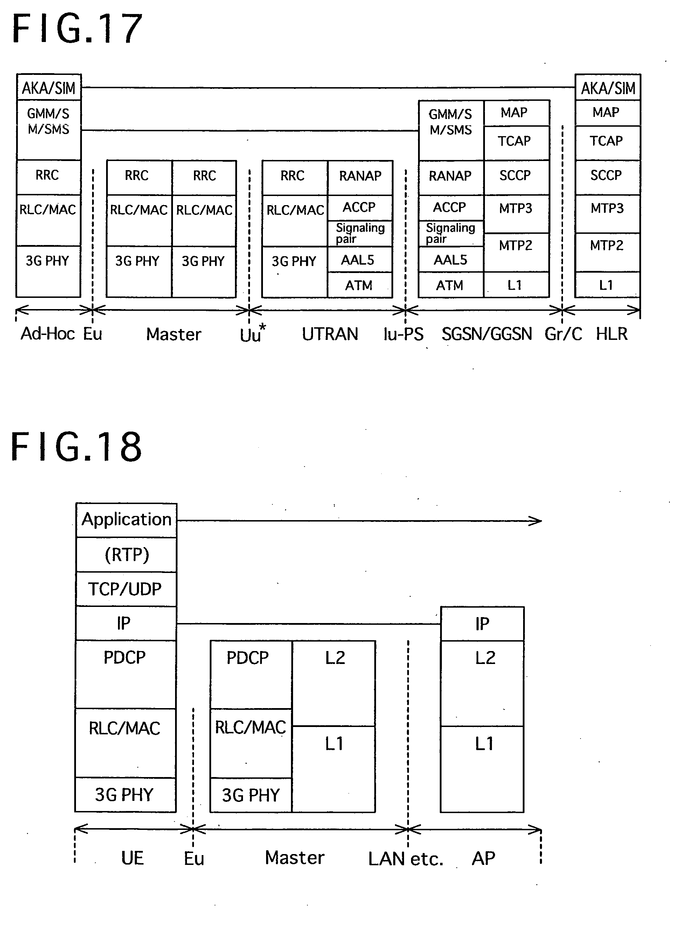

On the other hand, when the radio communication apparatus 110 accesses the mobile communications network 1 through the master of the ad-hoc network 2 (a radio communication apparatus that has the function of communicating with the base station 30 of the mobile communications network 1), the Eu interface is used for communication between the radio communication apparatus 110 (UE) and the master, and the Uu* interface is used in relaying the data transmitted from the master to the base station 30. The protocol stack of the radio communication apparatus 110 (UE) for transmitting data signals is composed of, frombottomto top, physical (3GPHY), RLC/MAC, PDCP (Packet Data Convergence Protocol), IP, TCP/UDP, (RTP), and application layers as shown in FIG. 16. Signals communicated between the radio communication apparatus 110 (UE) and the UTRAN 6 are relayed by the master in layer 2. For transmission of control signals for authentication, on the other hand, the protocol stack is composed of, from bottom to top, physical (3G PHY), MAC, RLC, RRC, GMM/SM/SMS, and AKA/SIM layers, as shown in FIG. 17, and the control signals for authentication are relayed by the master in the RRC layer. User information (the identification of a user) stored in the SIM card of the radio communication apparatus 110 is used in authentication of the radio communication apparatus 110. The user information is transmitted to the HLR 37 through the master, UTRAN 6, SGSN 35 and GGSN 36 and used to perform standard SIM/USIM (Universal SIM) authentication in the UMTS.

When the radio communication apparatus 110 accesses the IP network 3 through the master (a radio communication apparatus connected to the IP network 3 by wire or by radio) of the ad-hoc network 2, the Eu interface is used in communication between the radio communication apparatus 110 (UE) and the master, as shown in FIG. 18. The master has a protocol conversion module which converts the radio communication protocol into the IP protocol and uses this module to convert the protocol of data signals and control signals received from the radio communication apparatus 110 (UE), then sends out the signals to the IP network 3 by using a LAN, PPP (Point to Point Protocol) or PPPoE (PPP over Ethernet).

When authentication of the radio communication apparatus 110 is to be performed, user information stored in its SIM card or inputted through an input section of the radio communication apparatus 110 is transmitted through the master to the AAA server 40, where authentication is performed. Also, user information and its corresponding authentication data (a challenge such as a random number or a response generated by using the challenge) stored in the SIM card are exchanged between the AAA server 40 and the HLR 37 and challenge-response-based authentication by AKA (Authentication and Key Agreement) is performed at the HLR 37 as well. When the user' s identification is successfully validated as a result of these authentication operations, the AAA server 40 permits the radio communication apparatus 110 to connect to the IP network 3; when the user's identification is not validated, the AAA server 40 performs processing for rejecting the apparatus's connection to the IP network 3.

As has been described above, according to the second embodiment, a common communication system is adopted and the same frequency band is used for communication in an ad-hoc network 2 and in amobile communications network 1. Therefore, it is possible to provide a radio communication apparatus capable of connecting to both of the ad-hoc network 2 and the mobile communications network 1, in a simple configuration and at a low cost, and handover between the networks can be performed smoothly. Thus, seamless integration of the ad-hoc network 2 and the mobile communications network 1 can be accomplished.

Furthermore, since TDD is used as a duplex mode, frequencies can be used effectively compared with the case of using FDD as a duplex mode, and the transmission rates of the uplink and downlink can be readily controlled by changing the ratio of time slots between the uplink and downlink. Therefore, asymmetric data communication services which provide different transmission rates for uplink and downlink can be readily implemented as well.

Moreover, radio communication apparatuses in the ad-hoc network 2 directly communicate with each other, thereby a load on the mobile communications network 1 can be reduced, and thereby the efficiency of communication across the entire network can be increased.

Furthermore, the radio communication apparatus is provided with the Uu* interface for relaying communication between other radio communication apparatus in the ad-hoc network 2 and the base station 30. Therefore, when the ad-hoc network 2 includes a radio communication apparatus whose radio waves cannot reach the base station 30, for example, then another radio communication apparatus in the ad-hoc network 2 whose radio wave can reach the base station 30 can be used as a relay device. Thus, the communication area of the radio communication apparatus whose radio wave cannot reach the base station 30 can be extended.

Moreover, the Au interface is provided in the AAA server 40 for performing communication with the home location register 37 of the mobile communications network 1, authentication information can be shared between the mobile communications network 1 and the IP network 3.

Therefore, according to the second embodiment, seamless integration of the mobile communications network 1, ad-hoc network 2, and IP network 3 can be implemented inexpensively and thereby the network use efficiency and economy can be improved.

In each of the above embodiments, a common TDD-CDMA system is adopted and the same frequency band is used for communication within the ad-hoc network 2 and communication between the base station and the mobile station in the mobile communications network 1. However, the present invention is not limited thereto, and the telecommunication system to be used in the ad-hoc network 2 and in the mobile communications network 1 may be any common TDD-based telecommunication system, and a TDD-TDMA system or a TDD-OFDM system may be used, for example.

### Industrial Applicability

According to the present invention, the efficiency of communication in an ad-hoc network can be improved and the bandwidth and communication rate of the entire network can be increased.

Furthermore, a radio communication apparatus capable of connecting to both of an ad-hoc network and a mobile communications network can be provided with a simple configuration and at low cost.

Moreover, seamless integration of a mobile communications network, an ad-hoc network, and an IP network can be implemented inexpensively, thereby the efficiency and economy of network use can be improved.

## Claims

1. A radio communication apparatus having ad-hoc communication means for building an ad-hoc network with other nearby radio communication apparatus and performing communication with the other radio communication apparatus by radio,
wherein a radio communication apparatus that manages the entire ad-hoc network is a master and a radio communication apparatus that performs radio communication within the ad-hoc network under the management of the master is a slave, and
wherein the ad-hoc communication means comprises:
node type setting means for searching the ad-hoc network for the master and setting the node type of the radio communication apparatus to any of the master and slave on the basis of the search result;
set-up information acquisition means for, when the node type of the radio communication apparatus is set to the slave, transmitting and receiving control signals to and from the master to acquire set-up information required for communication with any of the master and slave in the ad-hoc network and storing the set-up information in storage means; and
data signal transmission means for directly transmitting and receiving data signals to and from any of the master and slave in the ad-hoc network in accordance with the set-up information acquired from the master.

2. The radio communication apparatus according to claim 1, wherein the ad-hoc communication means comprises:
node information collecting means for, when the node type of the radio communication apparatus is set to the master, transmitting and receiving control signals to and from each slave in the ad-hoc network to collect node information of each slave;
network information updating means for updating network information concerning the ad-hoc network on the basis of the collected node information of each slave and storing the updated network information in the storage means; and
network information delivery means for delivering the network information to each slave in the ad-hoc network.

3. The radio communication apparatus according to claim 2, wherein the ad-hoc communication means comprises set-up information transmitting means for, in response to a communication request from a slave in the ad-hoc network, allocating network resources on the basis of the network information stored in the storage means and transmitting set-up information in which the allocation of the network resources is specified to the slave that has issued the communication request, and
wherein the network information updating means updates the network information on the basis of the set-up information and stores the updated network information in the storage means; and
the network information delivery means delivers the updated network information to each slave in the ad-hoc network.

4. The radio communication apparatus according to claim 1, comprising mobile communication means for performing communication with a base station of a mobile communications network by using TDD-CDMA system,
wherein the ad-hoc communication means uses, in communication within the ad-hoc network, the same TDD-CDMA system that is used in the mobile communications network.

5. An ad-hoc system including a master and slaves, the master being a radio communication apparatus that manages an entire network and the slaves being radio communication apparatuses which perform radio communication under the management of the master,
wherein the master comprises:
node information collecting means for collecting node information of each slave by transmitting and receiving control signals to and from each slave in the ad-hoc network;
network information updating means for updating network information concerning the ad-hoc network on the basis of the collected node information of each slave and storing the updated network information in storage means;
set-up information transmitting means for, in response to a communication request from a slave in the ad-hoc network, allocating network resources on the basis of the network information stored in the storage means and transmitting set-up information in which the allocation of the network resources is specified to the slave that has issued the communication request; and
network information delivery means for delivering the network information to each slave in the ad-hoc network, and
wherein the slave comprises:
storage means for storing network information acquired from the master;
set-up information acquisition means for, when the slave intends to initiate communication with any of the master and other slave in the ad-hoc network, transmitting a communication request to the master to acquire the set-up information; and
data signal transmission means for transmitting and receiving data signals to and from any of the master and other slave in the ad-hoc network in accordance with the set-up information and the network information acquired from the master.

6. The ad-hoc system according to claim 5, wherein a radio network in a star topology at the center of which is the master is formed for transmitting the control signals; and
a radio network is formed in a mesh topology for transmitting the data signals.

7. A communication system in which TDD-CDMA system is used for communication between a base station of a mobile communications network and a radio communication apparatus that acts as a mobile station;
wherein the radio communication apparatus has ad-hoc communication means for building an ad-hoc network with other nearby radio communication apparatus and performing communication with the other radio communication apparatus by radio, and uses the same TDD-CDMA system and the same frequency band that are used in the mobile communications network, and
wherein the radio communication apparatus includes, as radio interfaces, a first interface for performing communication with the base station, a second interface for performing communication with other radio communication apparatus in the ad-hoc network, and a third interface for relaying communication between other radio communication apparatus in the ad-hoc network and the base station;
the radio communication apparatus is configured to be capable of connecting to an authentication server of an IP network as a client; and
the authentication server has an interface for performing communication with a home location register of the mobile communications network.

8. A communication system comprising:
a base station of a mobile communications network;
a radio communication apparatus which performs communication with the base station by using TDD-CDMA system;
a management equipment which, when the radio communication apparatus attempts to access the mobile communications network, receives user information of the radio communication apparatus via the base station and validates a user of the radio communication apparatus on the basis of the user information; and
an authentication server which is incorporated in an IP network;
wherein the radio communication apparatus comprises ad-hoc communication means for building an ad-hoc network with other nearby radio communication apparatus and performing communication with the other radio communication apparatus by radio, the ad-hoc communication means using, in communication with the other radio communication apparatus in the ad-hoc network, the same TDD-CDMA system and the same frequency band that are used in the mobile communications network and having the function of relaying communication between the other radio communication apparatus in the ad-hoc network and the base station;
the radio communication apparatus is configured to be capable of connecting to the authentication server as a client and, when connecting to the IP network through the authentication server, transmits the user information to the authentication server; and
the authentication server has an interface for connecting to the management equipment and, upon receiving the user information from the radio communication apparatus, validates the user in cooperation with the management equipment, and when the user is successfully authenticated as a result of the validation, permits the radio communication apparatus to connect to the IP network.

9. A radio communication apparatus which builds an ad-hoc network with other nearby radio communication apparatus, performs communication with the other radio apparatus by using any of TDD-CDMA, TDD-TDMA, and TDD-OFDM communication systems, and performs communication with a base station of a mobile communications network by using the same communication system and the same frequency band that are used in the communication with the other radio communication apparatus in the ad-hoc network,
the radio communication apparatus comprising:
relay means for relaying communication between the other radio communication apparatus in the ad-hoc network and the base station; and
radio interfaces including a first interface for performing communication with the base station, a second interface for performing communication with the other radio communication apparatus in the ad-hoc network, and a third interface for relaying communication between the other radio communication apparatus in the ad-hoc network and the base station.

10. The radio communication apparatus according to claim 9, comprising ad-hoc communication means for performing communication with other radio communication apparatus in the ad-hoc network using the second interface,
wherein the ad-hoc communication means comprises node type setting means for searching the ad-hoc network for a master and setting the node type of the radio communication apparatus to any of the master and slave on the basis of the search result;
when the node type setting means sets the node type to master, the ad-hoc communication means acquires node information from each slave in the ad-hoc network, updates network information concerning the entire ad-hoc network on the basis of the node information, stores the updated network information in storage means and, in response to a capacity request from any of the slaves in the ad-hoc network, allocates a communication channel on the basis of the network information stored in the storage means and transmits an allocation message to the slave that has issued the capacity request; and
when the node type setting means sets the node type to slave, the ad-hoc communication means transmits the node information to the master and, when performing communication with any of the master and slaves in the ad-hoc network, specifies any of the master and the slaves as a communication target in the capacity request, transmits the capacity request to the master, obtains the allocation message from the master, and then directly communicates with any of the master and slaves specified as the communication target in accordance with the allocation message.

11. The radio communication apparatus according to claim 9 , wherein, in a communication protocol of the second interface, layer 3 of OSI (Open Systems Interconnection) reference model is composed of an RRC (Radio Resource Control) sub-layer, and layer 2 is composed of an RLC (Radio Link Control) sub-layer and an MAC (Medium Access Control) sub-layer;
an SH-CCH (Shared Control Channel) and a DTCH (Dedicated Traffic Channel) are used as logical channels connecting the RLC sub-layer and the MAC sub-layer, an FACH (Forward Access Channel), an RACH (Random Access Channel) and a DCH (Dedicated Channel) are used as transport channels connecting the MAC sub-layer and layer 1, and an S-CCPCH (Secondary Common Control Physical Channel), a PRACH (Physical Random Access Channel) and a DPCH (Dedicated Physical Channel) are used as physical channels for communication between Layer 1 and nodes; and
the SH-CCH, the RACH and the PRACH are mapped to channels for control signals from a slave to a master, the SH-CCH, the FACH and the S-CCPCH are mapped to channels for control signals from a master to a slave, and the DTCH, the DCH and the DPCH are mapped to channels for data signals.

12. The radio communication apparatus according to claim 9, wherein the relay means allocates a communication channel in cooperation with the base station, applies protocol conversion to signals received from one of the other radio communication apparatus in the ad-hoc network and the base station, and transmits the signals to the other through the communication channel.

13. A communication system comprising:
a base station of a mobile communications network;
a mobile station which performs communication with the base station by using TDD-CDMA system;
a management equipment which, when the mobile station attempts to access the mobile communications network, receives user information of the mobile station via the base station and validates a user of the mobile station on the basis of the user information; and
an authentication server of an IP network based on the TCP/IP,
wherein the mobile station is configured to be capable of connecting to the authentication server as a client and, when connecting to the IP network through the authentication server, transmits the user information to the authentication server; and
the authentication server has an interface for connecting to the management equipment and, upon receiving the user information from the mobile station, validates the user in cooperation with the management equipment and, when the user is successfully authenticated as a result of the validation, permits the mobile station to connect to the IP network.

14. The communication system according to claim 13, wherein the management equipment is a home location register having a subscriber information database.

15. The communication system according to claim 13, wherein the user information is stored in an SIM card attached to the mobile station.

16. The communication system according to claim 13, wherein the mobile station is a radio communication apparatus which builds an ad-hoc network with other nearby radio communication apparatus to perform communication with the other radio communication apparatus by radio, and the mobile station uses, in communication within the ad-hoc network, the same TDD-CDMA system and the same frequency band that are used in the mobile communications network.

17. The communication system according to claim 16,
wherein the mobile station comprises relay means for relaying communication between the other radio communication apparatus in the ad-hoc network and the base station;
the mobile station is equipped with first, second, and third interfaces as radio interfaces, performs communication with the base station through the first interface, and performs communication with the other radio communication apparatus in the ad-hoc network through the second interface; and
when relaying communication between the other radio communication apparatus in the ad-hoc network and the base station, the mobile station performs communication with the base station through the third interface.

18. The radio communication apparatus according to claim 1, wherein the ad-hoc communication means uses, in communication within the ad-hoc network, the same frequency band and the same communication system that are used in communication with the base station of the mobile communications network, the communication system being any of the TDD-CDMA, TDD-TDMA, and TDD-OFDM communication systems.

19. The radio communication apparatus according to claim 1 , wherein the node type setting means performs, when setting the node type, processing for detecting a pilot signal transmitted from the master and, when the node type setting means detects the pilot signal, the node type setting means sets the node type of the radio communication apparatus to slave; when the node type setting means does not detect the pilot signal, the node type setting means sets the node type of the radio communication apparatus to master; and then the node type setting means performs processing for repeatedly broadcasting a pilot signal at predetermined intervals.
